# EUROPÄISCHE PATENTSCHRIFT

(11) **EP 2 838 836 B1**
(45) Veröffentlichungstag und Bekanntmachung des Hinweises auf die Patenterteilung: **22.08.2018**
(21) Anmeldenummer: 13721254.4
(22) Anmeldetag: 08.04.2013
(51) Int. Cl.: C01B 25/45, H01M 10/0562, H01M 10/052

(54) **VERFAHREN ZUR HERSTELLUNG LI-IONENLEITENDER LITHIUMALUMINIUMTITANPHOSPHATE UND DEREN VERWENDUNG ALS FESTKÖRPERELEKTROLYTE**
METHOD FOR PRODUCING LI-ION CONDUCTIVE LITHIUM ALUMINIUM TITANIUM PHOSPHATES AND USE THEREOF AS A SOLID-STATE ELECTROLYTE
PROCÉDÉ DE PRODUCTION DE PHOSPHATES DE LITHIUM-ALUMINIUM-TITANE, ET L'UTILISATION DE CEUX-CI COMME ÉLECTROLYTES SOLIDES

(30) Priorität: 19.04.2012 DE 102012103409
(43) Veröffentlichungstag der Anmeldung: 25.02.2015
(73) Patentinhaber: Karlsruher Institut für Technologie, 76131 Karlsruhe (DE)
(72) Erfinder: HOFFMANN, Michael, J., 76199 Karlsruhe (DE); SCHELL, Karl, G., 77855 Achern (DE); BUCHARSKY, Ethel, C., 76149 Karlsruhe (DE)
(86) Internationale Anmeldenummer: PCT/EP2013/001035
(87) Internationale Veröffentlichungsnummer: WO 2013/156116

(56) Entgegenhaltungen:
- MELANIE SCHROEDER ET AL: "Influence of spray granulation on the properties of wet chemically synthesized LiTiAl(PO)(LATP) powders", SOLID STATE IONICS, NORTH HOLLAND PUB. COMPANY. AMSTERDAM; NL, NL, Bd. 201, Nr. 1, 22. August 2011 (2011-08-22), Seiten 49-53, XP028310621, ISSN: 0167-2738, DOI: 10.1016/J.SSI.2011.08.014 [gefunden am 2011-09-03]
- XIAN MING WU ET AL: "Effect of sintering conditions on the properties of sol-gel-derived Li1.3Al0.3Ti1.7(PO4)3", IONICS, Bd. 16, Nr. 9, 4. September 2010 (2010-09-04), Seiten 827-831, XP055074501, ISSN: 0947-7047, DOI: 10.1007/s11581-010-0471-9
- WU X M ET AL: "Synthesis of Li1.3Al0.3Ti1.7(PO4)3 by sol-gel technique", MATERIALS LETTERS, NORTH HOLLAND PUBLISHING COMPANY. AMSTERDAM, NL, Bd. 58, Nr. 7-8, 1. März 2004 (2004-03-01) , Seiten 1227-1230, XP004486707, ISSN: 0167-577X, DOI: 10.1016/J.MATLET.2003.09.013

## Beschreibung

Die Erfindung betrifft ein Verfahren zur Herstellung lithiumionenleitender Lithiumaluminiuntitanphosphate (abgekürzt LATP), welche eine Fremdphasentoleranz aufweisen und mittels druckunterstützter Sinterung zu dichten oder nahezu dichten Körpern verarbeitet werden können. Das LATP besitzt eine hohe Lithiumionenleitfähigkeit und ist elektronisch praktisch isolierend, weshalb es sich als Festkörperelektrolyt in Lithiumionenakkus eignet.

Lithiumionenbatterien finden derzeit eine breite Verwendung als Energiequellen im mobilen Bereich. Ein Kernpunkt bei den Anwendungen ist der Sicherheitsaspekt der Li-Ionenbatterien, da die bisher üblicherweise eingesetzten Flüssigelektrolyten der Zellen auf organischer Basis brennbar sind. Dahingehend ist es Ziel der,aktuellen Forschung, effiziente Festkörperelektrolyten bereitzustellen. Dieser Festkörperelektrolyt konnte gleichzeitig die Funktion des Separators erfüllen. Dies ist insbesondere für Lithium-Schwefel Zellen interessant.

Bekannte Herstellrouten für LATP setzen entweder auf Festkörpersynthesen, Sol-Gel-Methoden oder verknüpfen beide Methoden, indem feste Ausgangsstoffe sowie Lösungen für die Synthese eingesetzt werden. Alle Methoder. besitzen spezifische Probleme, die durch vorliegende Erfindung zumindest teilweise gelöst werden.

Die Festkörpersynthese zeichnet sich durch das Mischen von Pulvern und anschließendem Kalzinieren aus, wobei als Nachteile lange Synthesezeiten; grobe Endpulver und starke Verunreinigungen zu nennen sind. So hergestellte LATPs sind nicht geeignet, um bei derzeitigem Kenntnisstand zur vorliegender.

Erfindung auch nur annähernd vergleichbar hohe Ionenleitfähigkeiten zu erhalten. Als Gründe werden die hohen Verunreinigungen und die groben Pulver angesehen. Beide Probleme müssen gelöst werden, um hohe Ionenleitfähigkeiten zu erreichen.

Die groben Partikel des LATPs lassen sich sehr schwer zu dichten Körpern sintern, weshalb kleine Partikelgrößen erstrebenswert sind.

Auch abgewandelte Festkörperrouten sind beschrieben, wobei dann die pulverförmigen Edukte stöchiometrisch eingewogen und im Temperaturbereich um 1400°C bis 1500°C aufgeschmolzen werden. Die Schmelze wird anschließend abgeschreckt und das amorphe Produkt gemahlen, verdichtet und vor oder nach der Verdichtung durch eine Glühung (teil-)kristallisiert. Es wäre allerdings wünschenswert, wenn man ohne einen Schmelzschritt, ohne Mahlbehandlung und ohne den Einsatz solch hoher Temperaturen auskäme.

In US 6,475,677 B1 wird beispielsweise die Herstellung einer Glaskeramik beschrieben, die eine prädominante Kristallphase der Formel Li_{1+x+y}AlₓTi₂₋ₓSi_{y}P_{3-y}O₁₂ (mit 0 ≤ X ≤ 1 und 0 ≤ y ≤ 1) enthält. Diese Glaskeramik wird durch Zusammenschmelzen der entsprechenden Metalloxide, -carbonate und -phosphate sowie von Ammoniumphosphat bei 1500°C erhalten. Die erhaltene Glaskeramik wird zu einem Pulver verarbeitet mit einer durchschnittlichen Partikelgröße von 7 µm. Weiterhin wird eine Verwendung dieser Glaskeramik als Festkörperelektrolyt in Lithiumionenbatterien beschrieben. Ein Verfahrensweg zur Herstellung der Keramik über einen einfacheren und energetisch vorteilhafteren Sol-Gel-Prozess, der zu kleineren Partikelgrößen führt, wird nicht vorgeschlagen.

In Schroeder et al. (M. Schroeder, S. Glatthaar, J. R. Binder "Influence of spray granulation on the properties of wet chen1ically synthesized Li1.3Ti1.7Al0.3(PO4)3 (LATP) powders" Solid State Ionics, 201 (2011) 49 -53) wird die Herstellung des Festkörperelektrolytmaterials Li_{1.3}Ti_{1.7}Al_{0.3}(PO₄)₃ durch eine einfache und eine sprühgetrocknete Ausfällung sowie eine Sol-Gel-Synthese offenbart. Insbesondere wurde bei der Durchführung der Sol-Gel-Synthese zur Steigerung der Löslichkeit von NH₄H₂PO₄ in Ethanol tropfenweise HNO₃ in konzentrierter Form zugegeben. Zusätzlich wurde dem Sol Acetylaceton zugesetzt, um Ti4+ in einem (Ti: Acetylaceton=1:2) Komplex zu stabilisieren und die Entstehung der Hydrolyseprodukte Ti(OCH₂(CH₂)₂CH₃)₄ zu vermeiden. Im Anschluss daran wurde das erzeugte Sol für mehrere Stunden bei 80 °C und 180 mbar durchmischt und für eine halbe Stunde bei 750 °C kalziniert. In Abhängigkeit von den genannten Herstellungsverfahren und den jeweiligen Herstellungsbedingungen sind die Materialstruktur und die ionische Leitfähigkeit des Festkörperelektrolytmaterials einstellbar.

In Wu et al. (X. M. Wu, J. L. Liu, S. Chen, M. Y. Ma, J. B. Liu "Effect of sintering conditions on the properties of sol-gel-derived Li1.3Al0.3Ti1.7(PO4)3" Ionics 16 (2010) 827 - 831) ist die Herstellung des Festkörperelektrolyten Li_{1.3}Al_{0.3}Ti_{1.7}(PO₄)₃ mit Hilfe einer unter verschiedenen Sinterbedingungen durchgeführten Sol-Gel-Methode beschrieben. Li(CH₃COO)·2H₂O und Al(NO₃)₃·9H₂O wurden dabei zunächst in einem stöchiometrischen Verhältnis in CH₃OCH₂CH₂OH gelöst. Im Anschluss daran wurde PO(OC₄H₉)₄ und Ti(OC₄H₉)₄ nacheinander in die Mischung eingetropft. Die entstandene Lösung wurde für die Dauer von 4 h bei 140 °C getrocknet, um ein Gel aus das Li_{1.3}Al_{0.3}Ti_{1.7}(PO₄)₃ herzustellen. Dieses Gel wurde für 2 h bei 900 °C an Luft kalziniert. Das dabei entstandene Li_{1.3}Al_{0.3}Ti_{1.7}(PO₄)₃-Pulver wurde gemahlen, zu Pellets gepresst, und unter verschiedenen Bedingungen gesintert. Die gesinterten Pellets wurden mit Hilfe von verschiedenen physikalischen Methoden charakterisiert, um Aussagen über die Struktur, die Morphologie, die ionische Leitfähigkeit und die Aktivierungsenergie von Li_{1.3}Al_{0.3}Ti_{1.7}(PO₄)₃ zu gewinnen. Eine ähnliche Sol-Gel-Methode zur Herstellung des Festkörperelektrolyten Li_{1.3}Al_{0.3}Ti_{1.7}(PO₄)₃ ist in Wu et al. (X. M. Wu, X. H. Li, Y. H. Zhang, M. F. Xu, Z. Q. He "Synthesis of Li1.3Al0.3Ti1.7(PO4)3 by sol-gel technique" Material Letters 58 (2004) 1227 - 1230) offenbart. Zusätzlich zu der beschriebenen Sol-Gel-Methode wurde eine Festkörperreaktion zur Herstellung von Li_{1.3}Al_{0.3}Ti_{1.7}(PO₄)₃ Pellets beschrieben. An beiden Pellet-Typen wurde die Lithiumionenleitfähigkeit gemessen. Es zeigte sich, dass die Lithiumionenleitfähigkeit der durch die Sol-Gel-Technik hergestellten, gesinterten Pellets höher ist als die, der durch eine Festkörperreaktion synthetisierten Pellets.
Xu et al. (X. Xu, Z. Wen, J. Wu, X. Yang "Preparation and electrical properties of NASICAON-type structured Li1.4AL0.4Ti1.6(PO4)3 glass-ceramics by the citric acid-assisted sol-gel method" Solid State Ionics 178 (2007) 29-34) beschreiben ein Verfahren zur Herstellung von Glaskeramiken der Formel Li_{1.4}AL_{0.4}Ti_{1.6}(PO₄)₃ über ein Sol-Gel Verfahren, das in Anwesenheit von Zitronensäure und Glykol als Gel-vermittelnde Komponenten durchgeführt wird. Diese organischen Komponenten werden in einem zusätzlichen Veresterungs- und Polykondensationsschritt zum Gel umformiert. Auf die Anwesenheit von. Alkoholaten (Titan(IV)-butoxid) wird hier nicht verzichtet. Bei diesem Prozess gestaltet sich die mehrstufige Herstellung aufwendig und auch trotz der genauen Prozessführung, die darauf zielt, dass die Kationenmobilität im Sel, durch das Polymernetzwerk verhindert wird, sind auch hier Fremdphasen im Produkt zu erkennen. In dieser Schrift wird weiterhin darauf hingewiesen, dass das erhaltene LATP als Festkörperelektrolyt verwendet werden kann.

In DE 10 2009 049 693 A1 und DE 10 2009 049 694 A1 werden Verfahren offenbart, bei denen phasenreine Verbindungen der Formel Li₁₊ₓTi₂₋ₓAlₓ(PO₄)₃ hergestellt werden. Diese Verbindungen werden zur Verwendung als Festkörperelektrolyte in Lithiumionenbatterien vorgeschlagen. Die Phasenreinheit soll zu einer höheren Lithiumionenleitfähigkeit führen, die hier mit 0,7 mS/cm gemessen wurde. Bei dem Verfahren werden die entsprechenden Metallsalze als feste Edukte eingesetzt und in vorgelegte Phosphorsäure unter heftiger Gasentwicklung und starkem Aufschäumen eingebracht. Das Gemisch wird anschließend bis zur vollständigen Erstarrung erhitzt und das Rohprodukt muss über einen sehr langen Zeitraum (6 h) gemahlen werden, damit ein feines Pulver entsteht. Danach erfolgt ein Sintern über 24 h und ein erneutes Vermahlen des Produkts. Mittels dieses Verfahrens ist eine einfache Methode zur Beschichtung von Substraten nicht möglich, da die Mahlschritte erforderlich sind und somit ein Pulver manipuliert werden muss. Wünschenswert wäre vielmehr ein in situ-Prozess, bei dem möglichst wenige Verfahrensstufen, die mit einem Umfüllen und Zerkleinern des Produkts verbunden sind, erforderlich sind. Das Verfahren ist darüber hinaus sehr langwierig und ergibt ein LATP mit einer vergleichsweise niedrigen Leitfähigkeit.

Aufgabe der vorliegenden Erfindung ist es daher ein Verfahren bereit zu stellen, mit welchem auf kostengünstige Weise und mit begrenzter Zahl an Verfahrensschritten ein LATP der allgemeinen Formel Li_{1+x+y}AlₓTi₂₋ₓSi_{y}P_{3-y}O₁₂ mit 0 < X ≤ 0,4 und 0 ≤ y ≤ 0,6 hergestellt werden kann, das eine gute Lithiumionenleitfähigkeit besitzt. Weiterhin soll der Einsatz von teuren Chemikalien vermieden werden. Dieses Verfahren soll auch geeignet sein, um Beschichtungen von LATP auf Substraten anzufertigen. Diese Substrate können beispielsweise Bauteile in Lithiumionenbatterien sein.

Die vorliegende Erfindung löst die Aufgabe durch die in Anspruch 1, 7 und 8 beanspruchten Verfahren. Bevorzugte Ausführungsformen des Verfahrens sind in den rückbezogenen Ansprüchen beschrieben.

Die vorliegende Erfindung stellt ein Syntheseverfahren zur Herstellung von Li_{1+x+y}AlₓTi₂₋ₓSi_{y}P_{3-y}O₁₂ mit 0 < X ≤ 0,4 und 0 ≤ y ≤ 0,6, bereit, bei dem wässrige Lösungen von Lithium-, Aluminium- und Phosphatsalzen vorgelegt werden. Vorzugsweise haben die wässrigen Lösungen eine Konzentration von 0,1 M bis 10 M und einen pH-Wert im neutralen bis basischen Bereich bei pH 7 bis 12.

Die Lithium- und Aluminiumsalzlösungen werden vereint und mit einem Titanalkoxid und ggf. ein Orthosilikat in den notwendigen Mengenverhältnissen versetzt, wodurch ein Sol entsteht.

Orthosilikate bezeichnen hier die Orthokieselsäure (Si(OH)₄) sowie deren Ester und wasserlöslichen Salze. Vorzugsweise wird Tetraethylorthosilikat (TEOS, C₈H₂₀O₄Si) eingesetzt.

Das Hinzufügen von Orthosilikat führt dazu, dass im Kristallgitter des LATP der Ausgangsformel Li₁₊ₓTi₂₋ₓAlₓ(PO₄)₃ (mit 0 < X ≤ 0,4) die Phosphattetraeder teilweise durch Silikattetraeder ersetzt werden. Die dadurch verursachten negativen Ladungsüberschüsse im Kristallgitter werden kompensiert durch das Hinzufügen der äquimolaren Menge an Lithiumionen. Dadurch kann sich die Lithiumionenleitfähigkeit des LATP erhöhen.

Anschließend wird die Phosphatlösung hinzugefügt, worauf spontan ein Gel entsteht- Das Gel bildet sich durch die Hydrolyse der Prekursor-Moleküle wodurch eine Kondensations- und Polymerisationsreaktion einsetzt, die durch das Zusammenbringen von Alkoxid- mit Phosphatlösung ausgelöst wird. Diese Verfahrensweise vereinfacht die LATP-Herstellung gegenüber dem Stand der Technik erheblich, da die Gelierung durch eine Reaktion von Titanalkoxid bzw. Siliziumalkoxids und wässrig gelöstem Phosphat bei Anwesenheit von Lithium- und Aluminiumionen erfolgt, ohne dass weitere Hilfssubstanzen wie Glykol oder Zitronensäure erforderlich sind. Damit sind umfangreiche Zwischenschritte überflüssig.

Im Zusammenhang mit der vorliegenden Erfindung bedeutet der Begriff Sol eine kolloidale Lösung, in der ein fester oder flüssiger Stoff in feinster Verteilung in einem festen, flüssigen oder gasförmigen Medium dispergiert ist.

Im Zusammenhang mit der vorliegenden Erfindung bedeutet der Begriff Gel ein formbeständiges, leicht deformierbares, an Flüssigkeiten reiches disperses System aus mindestens zwei Komponenten, die aus den festen, kolloidzerteilten Ionen mit langen oder stark verzweigten Teilchen, die aus einer Kondensationsreaktion mit Phosphatgruppen entstehen, und Wasser als Dispersionsmittel besteht. Dabei bildet die feste Substanz im Dispersionsmittel ein räumliches Netzwerk.

Dieses Gel wird im Folgeschritt getrocknet. Der Trocknungsschritt kann entweder an der Raumluft durchgeführt werden, bevorzugt ist allerdings das Trocknen in einem Trockenschrank, vorzugsweise bei einer Temperatur von 40 °C bis 80 °C während 6 h bis 24 h, wobei der Trocknungsprozess entsprechend kürzer ist. Zur weiteren Trocknung des Gels erfolgt die Wärmebehandlung des Rückstands, indem das Gel langsam min 0,1 °C/min bis 10°C/min auf 800°C bis 1000°C erhitzt wird und bei der Endtemperatur während 1 h bis 5 h kalziniert wird.

Die Wärmebehandlung kann an der Luft erfolgen. Das langsame Aufheizen hat den Zweck, dass zunächst die störenden volatilen Bestandteile pyrolytisch entfernt werden. Dies betrifft insbesondere das Entfernen der Gegenionen der eingesetzten Salze, wie z.B. Nitrat, Ammonium, Chlorid, Acetat, Alkoxid o.Ä. Bei höherer Temperatur bildet sich dann das gewünschte LATP aus.

In einer bevorzugten Ausführung des Verfahrens kann die Wärmebehandlung zweistufig erfolgen, indem der getrocknete Rückstand zunächst bei einer Temperatur von 200°C bis 500°C wahrend 1 h bis 6 h behandelt wird, und anschließend das so erhaltene Rohprodukt bei 800°C bis 1000°C während 1 h bis 5 h kalziniert wird.

Als Lithiumsalze werden vorzugsweise Lithiumacetat, Lithiumcarbonat, Lithiumhydroxid oder Lithiumnitrat eingesetzt.

Die Aluminiumsalze werden bevorzugt ausgewählt aus der Gruppe Aluminiumnitrat, Aluminiumhydroxid oder Aluminiumoxalat.

Das Titanalkoxid wird vorzugsweise ausgewählt aus der Gruppe Titanethoxid, Titanpropoxid, Titanpropoxid, Titanbutoxid oder Titanisopropoxid.

Das Phosphatsalz kann ein Ammoniumphosphat oder Phosphorsäure sein, besonders bevorzugt Ammoniumdihydrogenphosphat.

Im Unterschied zum Stand der Technik wird bei der erfindungsgemäßen Syntheseroute auf einen anderen Reaktionsmechanismus, gesetzt, wodurch die Synthese vereinfacht und verkürzt wird. Außerdem sind die erhaltenen Pulver feinkörnig Mörsern. Die erhaltene Partikelgröße Hängt stark von der Kalzinierdauer und -temperatur ab. Bei der beschriebenen Prozessführung wird eine durchschnittliche Partikelgröße der LATP von 0,5 µm bis zu 5 µm erhalten. Bei der erfindungsgemäßen Synthese findet der Prozess zur Herstellung von LATP, bis auf die Kalzinierung, bei Raumtemperatur statt.

Das so erhaltene Pulver aus Lithiumaluminiumtitanphosphat kann in einem nachfolgenden Schritt direkt zu einem Festkörperelektrolyten für Lithiumionenbatterien verarbeitet werden. Hierzu wird das pulverförmige LATP, das nach der oben beschriebenen Vorschrift hergestellt wurde, gesintert, vorzugsweise unter uniaxialem Druck von 5 MPa bis 50 MPa bei einer Temperatur von 650°C bis 1250°C während 3 min bis 60 min. Durch das Sintern unter diesen Bedingungen werden dichte Sinterkörper erhalten. Die Druckunterstützung ist erforderlich, wenn eine höhere Dichte erzielt werden soll, um die Leitfähigkeit des Sinterkörpers zu steigern.

Bei Bedarf kann das beschriebene Verfahren auch zur Herstellung von Festkörperelektrolyten auf einem Substrat angewendet werden. Hierzu wird das Gel aus Lithium-, Aluminium-, Phosphatsalzen und dem Titanalkoxid und optional dem Orthosilikat auf ein zu beschichtendes Substrat aufgetragen.

Alternativ, ist es möglich, dieses LATP-Gel durch Applizieren der einzelnen Salzlösungen oder Flüssigkeiten über Sprüh- oder Tauchverfahren direkt auf dem Substrat herzustellen. Diese Verfahrensweise ist möglich, da sich das Gel, unter den oben beschriebenen Reaktionsbedingungen spontan ausbildet.

Nach der Beschichtung des Substrats erfolgen der Trocknungsschritt und die Wärmebehandlung analog zur eingangs beschriebenen Verfahrensweise. Anschließend wird das kalzinierte LATP gesintert. Allerdings reicht hier ein deutlich geringerer Druck von 0,1 MPa bis 5 MPa bei 650°C bis 1250°C während 3 min bis 30 min, da es sich um eine dünne Schicht handelt und somit nur die Sinterspannungen kompensiert werden müssen, damit der Sinterschwund nur in z-Richtung stattfindet.

Auf diese Weise ist es möglich, Bauteile für Lithiumionenbatterien über relativ einfache Verfahrensschritte mit einem flächigen Festkörperelektrolyten auszustatten. Dieser Festkörperelektrolyt könnte gleichzeitig die Funktion, des Separators erfüllen. Dies ist insbesondere für Lithium-Schwefel Zellen interessant.

Das erfindungsgemäß hergestellte Material besteht hauptsächlich aus Lithiumaluminiumtitanphosphat (Li₁₊ₓTi₂₋ₓAlₓ(PO₄)₃ mit 0 < X ≤ 0,4 oder Li_{1+x+y}AlₓTi₂₋ₓSi_{y}P_{3-y}O₁₂ mit 0 < X ≤ 0,4 und 0 ≤ y ≤ 0,6) und kann daneben Spuren von Aluminiumphosphat (AlPO₄) sowie Titanphosphat (TiP₂O₇) enthalten. Durch diese Fremdphasen wird die ionische Leitfähigkeit nur minimal beeinflusst. Bisher wurde allgemein davon ausgegangen, dass Fremdphasen die Leitfähigkeit einschränken, weshalb große Anstrengungen unternommen werden, um fremdphasenfreie LATP herzustellen. Dies ist bei der vorliegend erfundenen Synthese und der anschließenden Sinterung nicht erforderlich, da trotz dieser Fremdphasen hohe Leitfähigkeiten (Größenordnung 1 mS/cm. bei Raumtemperatur, an Luft) erreicht werden. Dadurch vereinfacht sich der Synthese-prozess erheblich, wodurch Energie und Kosten eingespart werden.

Die Erfindung wird im Folgenden mit Ausführungsbeispielen und Abbildungen erläutert.
**Fig. 1****:** Graphische Auswertung der Röntgendiffraktometrie von Li_{1,3}Al_{0,3}Ti_{1,7}(PO₄)₃.
**Fig. 2****:** Darstellung der temperaturabhängigen Leitfähigkeit von Li_{1,3}Al_{0,3}Ti_{1,7}(PO₄)₃ ermittelt über Impedanzspektroskopie.

### Beispiel 1: Herstellung von Li_{1,3}Al_{0,3}Ti_{1,7}(PO₄)₃:

Die eingesetzten Chemikalien hatten den Reinheitsgrad von mindestens 98 %. 7,54 g Aluminiumnitrat [Al(NO₃)₃*9H₂O] und 8,65 g Lithiumacetat [Li(CH₃COO)] wurden jeweils in 10 mL Wasser gelöst. Beide Lösungen wurden gemischt. Dazu wurden 33,77 mL Titanisopropoxid [Ti(IV)((CH₃)₂CH₂O))₄] gegeben. Anschließend wurden 22,49 g Ammoniumdihydrogenphosphat (NH₄H₂PO₄) in 20 mL Wasser gelöst und in die Mischung der wässrigen Lösungen der Lithium- und Aluminiumsalze mit Titanisopropoxid eingetropft, wodurch spontan ein Gel entsteht. Alternativ wurden anstatt der Ammoniumdihydrogenphosphatlösung 13,25 mL 85 %iger Phosphorsäure gegeben.

Das Gel wurde an Luft für einen Tag getrocknet. Anschließend wurde der getrocknete Rückstand bei 400°C für 6 h an Luft wärmebehandelt und schließlich bei 900°C für 4 h kalziniert. Es verbleibt als Produkt ein grau-weißes feines Pulver mit einer durchschnittlichen Korngrößenverteilung von 1,2 µm.

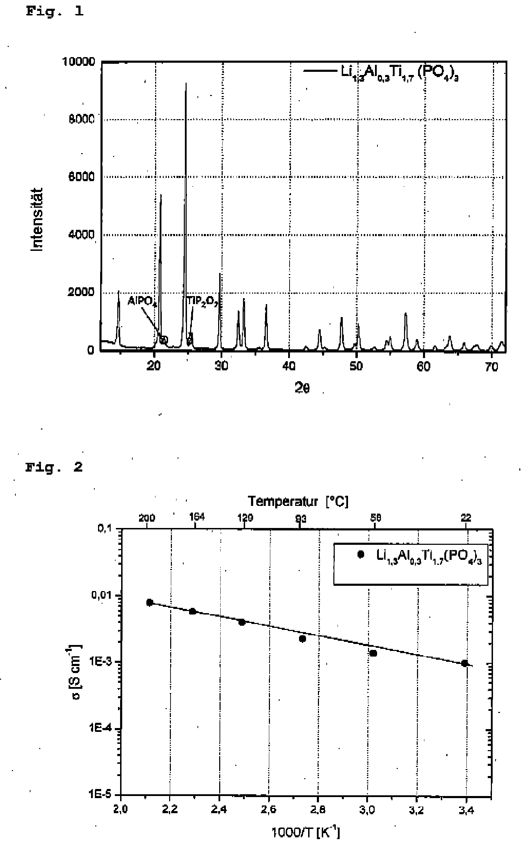

Die Charakterisierung des Produkts erfolgte mittels Röntgendiffraktometrie. Wie aus der **Fig. 1** zu entnehmen ist, ist der Hauptbestanteil des Produkts das gewünschte LATP, wobei noch minimale Anteile der Fremdphasen von AlPO₄ und TiP₂O₇ zu erkennen sind. Das LATP kristallisiert in der trigonalen Raumgruppe R3̅c, wobei pseudokubische Kristalle ausgebildet werden.

### Beispiel 2: Herstellung eines Festkörperelektrolyten mit der Verbindung aus Beispiel 1

Das in Beispiel 1 erhaltene Produkt wurde anschließend einem Sinterungsschritt unterzogen. Hierzu wurden 2,5 g des Produkts in einem Graphittiegel bei einem uniaxialen Druck von 50 MPa mittels einer Gleichstromquelle auf eine Temperatur von 1150°C erhitzt (Sinteranlage der Firma FCT, Modell HPD-25/1). Nach 15 min wurde ein grauschwarzer poröser Festkörper erhalten. Die grauschwarze Färbung resultiert aus dem Graphit der Matrize, weshalb die Probe allseitig um ca. 0,25 mm abgeschliffen wurde um das Graphit vollständig zu entfernen und Blanparallelität der Stirnflächen für weitere Messungen zu erhalten. Die Probe ist - entsprechend dem Pulver - gräulich weiß. Die Dichte der so erhaltenen Probe wurde nach Archimedes bestimmt, wobei keine offene Porosität festzustellen war und die, Dichte nahezu der theoretischen Dichte entsprach.

### Beispiel 3: Leitfähigkeitsmessungen einer Elektrolytschicht aus Beispiel 2

Die Messung der Leitfähigkeit des in Beispiel 2 erhaltenen LATP erfolgte über Impedanzspektroskopie. Dafür wurde die Probe mit Goldelektroden besputtert und im Frequenzbereich von 1 MHz bis 1 Hz gemessen. Aus der Auftragung der frequenzabhängigen Impedanz in Nyquist-Darstellung wurde der Widerstand unter Zuhilfenahme der Modellvorstellung eines parallelgeschaltenen RC-Gliedes ermittelt und daraus unter Kenntnis der Probengeometrie die spezifische Leitfähigkeit der Größenordnung von 1 mS/cm bei Raumtemperatur bestimmt werden.

Mittels der erfindungsgemäßen Herstellmethode konnten wiederholt Zusammensetzungen von Li_{1+x+y}AlₓTi₂₋ₓSi_{y}P_{3-y}O₁₂ mit 0 < X ≤ 0,4 und 0 ≤ y ≤ 0,6 hergestellt und charakterisiert werden. Selbst bei einer Einwaage, die einer nicht darstellbaren Stöchiometrie von x = 0,6 entspricht, wurde eine hohe Leitfähigkeit im Produkt erzielt, obwohl der Fremdphasenanteil hoch ist. Dies spricht dafür, dass das Material Fremdphasentolerant ist und selbst in einem Gemisch zu einer hohen Leitfähigkeit der Gesamtprobe führt.

## Patentansprüche

1. Verfahren zur Herstellung von Lithiumaluminiumtitanphosphaten der allgemeinen Formel
Li_{1+x+y}AlₓTi₂₋ₓSi_{y}P_{3-y}O₁₂
mit 0 < X ≤ 0,4 und 0 ≤ y ≤ 0,6, umfassend folgende Schritte:
a) Bereitstellen von wässrigen Lösungen von Lithium-, Aluminium- und Phosphatsalzen,
b) Mischen der Lithium- und Aluminiumsalzlösungen mit einem Titanalkoxid und ggf. einem Orthosilikat in den notwendigen Mengenverhältnissen, wodurch ein Sol entsteht,
c) Hinzufügen der Phosphatlösung, wobei ein Gel entsteht,
d) Trocknen des Gels,
e) Wärmebehandlung des getrockneten Rückstands, indem das getrocknete Gel langsam mit 0,1°C/min bis 10°C/min auf 600°C bis 1000°C erhitzt wird und bei der Endtemperatur während 1 h bis 24 h kalziniert wird.

2. Verfahren nach Anspruch 1, wobei der Schritt e) zweistufig erfolgt, indem der getrocknete Rückstand aus Schritt d) zunächst bei 200°C bis 500°C während 1 h bis 6 h behandelt wird, und anschließend das Rohprodukt bei 600°C bis 1000°C während 1 h bis 5 h kalziniert wird.

3. Verfahren nach einem der Ansprüche 1 bis 2, wobei die Lithiumsalze ausgewählt sind aus der Gruppe Lithiumacetat, Lithiumcarbonat, Lithiumhydroxid und Lithiumnitrat.

4. Verfahren nach einem der Ansprüche 1 bis 3, wobei die Aluminiumsalze ausgewählt sind aus der Gruppe Aluminiumnitrat, Aluminiumhydroxid und Aluminiumoxalat.

5. Verfahren nach einem der Ansprüche 1 bis 4, wobei das Titanalkoxid Titanethoxid, Titanmethoxid, Titanpropoxid, Titanbutoxid, Titanisobutoxid, Titan-t-butoxid oder Titanisopropoxid ist.

6. Verfahren nach einem der Ansprüche 1 bis 5, wobei das Phosphatsalz Ammoniumphosphat oder Phosphorsäure ist.

7. Verfahren zur Herstellung von Festkörperelektrolyten aus Lithiumaluminiumtitanphosphaten für Lithiumionenbatterien umfassend das Verfahren nach den Ansprüchen 1 bis 6 und anschließendes Sintern unter uniaxialem Druck von 5 MPa bis 50 MPa bei 650 °C bis 1.250 °C während 3 min bis 60 min.

8. Verfahren zur Herstellung von Festkörperelektrolyten auf einem Substrat, umfassend folgende Schritte:
a) Herstellen eines Gels nach den Schritten a) bis c) der Ansprüche 1 bis 6,
b) Auftragen des Gels auf das zu beschichtende Substrat,
c) Trocknen, Wärmebehandeln und Kalzinieren des Gels auf dem Substrat nach den Schritten d) bis f) der Ansprüche 1 bis 6,
d) Sintern des beschichteten Substrats unter uniaxialem Druck 0,1 MPa bis 5 MPa bei 650°C bis 1250°C während 3 min bis 30 min.

## Claims

1. Method for producing lithium aluminium titanium phosphates of the general formula:
Li_{1+x+y}AlₓTi₂₋ₓSi_{y}P_{3-y}P_{3-y}O₁₂
where 0 < X ≤ 0.4 and 0 ≤ y ≤ 0.6,
comprising the following steps:
a) preparation of aqueous solutions of lithium salts, aluminium salts, and phosphate salts,
b) mixing of lithium salt and aluminium salt solutions with a titanium alkoxide and, as appropriate, an orthosilicate, in the necessary quantity proportions, as a result of which a sol is produced,
c) adding the phosphate solution, wherein a gel is produced,
d) drying of the gel,
e) heat treatment of the dried residue, in that the dried gel is heated slowly at 0.1 °C/min to 10°C/min to 600 °C to 1000 °C and at the end temperature is calcinated for 1 h to 24 h.

2. Method according to claim 1, wherein the step a) takes place as two stages, in that the dried residue from step d) is initially treated at 200 °C to 500 °C for 1 h to 6 h, and the raw product is then calcinated at 600 °C to 1000 °C for 1 h to 5 h.

3. Method according to any one of claims 1 to 2, wherein the lithium salts are selected from the group of lithium acetate, lithium carbonate, lithium hydroxide, and lithium nitrate.

4. Method according to any one of claims 1 to 3, wherein the aluminium salts are selected from the group of aluminium nitrate, aluminium hydroxide, and aluminium oxalate.

5. Method according to any one of claims 1 to 4, wherein the titanium alkoxide is titanium ethoxide, titanium methoxide, titanium propoxide, titanium butoxide, titanium-t-butoxide, or titanium isopropoxide.

6. Method according to any one of claims 1 to 5, wherein the phosphate salt is ammonium phosphate or phosphoric acid.

7. Method for producing solid-state electrolytes from lithium aluminium titanium phosphates for lithium ion batteries, comprising the method according to claims 1 to 6, and then sintering under uniaxial pressure of 5 MPa to 50 MPa at 650 °C to 1,250 °C for 3 mins. to 60 mins.

8. Method for producing solid-state electrolytes on a substrate, comprising the following steps:
a) producing a gel in accordance with steps a) to c) of claims 1 to 6,
b) applying the gel onto the substrate which is to be coated,
c) drying, heat treating, and calcinating of the gel on the substrate in accordance with steps d) to f) of claims 1 to 6,
d) sintering the coated substrate under uniaxial pressure of 0.1 MPa to 5 MPa at 650 °C to 1,250 °C for 3 mins to 30 mins.

## Revendications

1. Procédé d'obtention de phosphates de lithium aluminium titane de formule générale
Li_{1+x+y}AlₓTi₂₋ₓSi_{y}P_{3-y}O₁₂
avec 0 < X ≤ 0,4 et 0 ≤y ≤ 0,6,
comprenant les étapes suivantes consistant à :
a) préparer des solutions aqueuses de sels de lithium, de sels d'aluminium et de sels de phosphate,
b) mélanger les solutions de sels de lithium et de sels d'aluminium avec un alcoolate de titane et, le cas échéant, un orthosilicate dans les proportions nécessaires pour obtenir un sol,
c) ajouter la solution de phosphate de façon à obtenir un gel,
d) sécher le gel,
e) soumettre à un traitement thermique le résidu séché en chauffant lentement le gel séché de 0,1°C/minute à 10°C/minute à 600°C à 1000°C et en le calcinant à la température finale pendant 1 à 24 h.

2. Procédé conforme à la revendication 1,
selon lequel l'étape e) est mise en oeuvre en deux étapes en traitant le résidu séché provenant de l'étape d) tout d'abord entre 200°C et 500°C pendant 1 heure à 6 heures puis en calcinant le produit brut entre 600°C et 1000°C pendant 1 à 5 heures.

3. Procédé conforme à l'une des revendications 1 et 2,
selon lequel les sels de lithium sont choisis dans le groupe formé par les sels suivants : acétate de lithium, carbonate de lithium, hydroxide de lithium et nitrate de lithium.

4. Procédé conforme à l'une des revendications 1 à 3,
selon lequel les sels d'aluminium sont choisis dans le groupe formé par les sels suivants : nitrate d'aluminium, hydroxyde d'aluminium et oxalate d'aluminium.

5. Procédé conforme à l'une des revendications 1 à 4,
selon lequel l'alcoolate de titane est de l'éthoxide de titane, du méthylate de titane, du propylate de titane, du butylate de titane, de l'isobutylate de titane, du t-butylate de titane ou du propylate de titane.

6. Procédé conforme à l'une des revendications 1 à 5,
selon lequel le sel de phosphate est du phosphate d'ammonium ou de l'acide phosphorique.

7. Procédé d'obtention d'électrolytes solides à partir de phosphates de lithium, aluminium titane pour des batteries lithium-ions comprenant la mise en oeuvre du procédé conforme aux revendications 1 à 6, puis un frittage sous une pression uniaxiale de 5 MPa à 50 MPa entre 650°C et 1250°C pendant 3 minutes à 60 minutes.

8. Procédé d'obtention d'électrolytes solides sur un substrat comprenant les étapes suivantes consistant à :
a) préparer un gel conformément aux étapes a) à c) des revendications 1 à 6,
b) appliquer le gel sur le substrat à recouvrir,
c) sécher, soumettre à un traitement thermique et calciner le gel sur le substrat conformément aux étapes d) à f) des revendications 1 à 6,
d) fritter le substrat revêtu sous une pression uniaxiale de 0,1 MPa à 5 MPa entre 650°C et 1250°C pendant 3 minutes à 30 minutes.
